# EUROPÄISCHE PATENTSCHRIFT

(11) **EP 1 074 374 B1**
(45) Veröffentlichungstag und Bekanntmachung des Hinweises auf die Patenterteilung: **21.09.2005**
(21) Anmeldenummer: 99113324.0
(22) Anmeldetag: 09.07.1999
(51) Int. Cl.: B29C 45/47

(54) **Verfahren zum Spritzgiessen**
Injection moulding process
Procédé de moulage par injection

(43) Veröffentlichungstag der Anmeldung: 07.02.2001
(73) Patentinhaber: ENGEL AUSTRIA GmbH, 4311 Schwertberg (AT)
(72) Erfinder: Steinbichler, Georg, 8786 Rottenmann (AT); Pokorny, Peter, 4311 Schwertberg (AT)
(74) Vertreter: Hofinger, Engelbert

(56) Entgegenhaltungen:
- WO-A-98/16364
- AU-B- 474 563
- CH-A- 331 628
- DE-A- 1 954 287
- DE-C- 467 753
- FR-A- 1 197 872
- GB-A- 620 652
- GB-A- 646 781
- GB-A- 1 363 537
- US-A- 2 952 041
- US-A- 3 052 925
- US-A- 4 952 364

## Beschreibung

Die Erfindung bezieht sich auf ein Verfahren zum Spritzgießen, bei dem unter Druck stehender Kunststoff aus einem absperrbaren Vorraum nach Öffnen einer Absperrung in einen Formhohlraum gespritzt wird und diesen unter Druck füllt.

Das Einspritzen des Kunststoffes erfolgt üblicherweise mittels der zur Plastifizierung des Kunststoffes dienenden Schnecke, welche beim Einspritzvorgang als Kolben wirkt. Es ist jedoch auch vielfach vorgeschlagen worden, den plastifizierten Kunststoff in einen gesonderten Vorraum zu bringen, aus welchem er durch einen von der Plastifizierschnecke unabhängigen Kolben ausgetrieben wird.

Insbesondere beim Herstellen kleiner und dünnwandiger Teile ist es wesentlich, den Einspritzvorgang rasch zu vollenden, da es sonst bereits während des Einspritzens zu einem teilweisen Erstarren des Kunststoffes in der gekühlten Form kommt. Um hohe Einspritzgeschwindigkeiten zu erzielen, hat man bisher die Vorlaufgeschwindigkeit der Schnecke bzw. eines allenfalls vorgesehenen gesonderten Einspritzkolbens immer mehr gesteigert. Eine Weiterentwicklung in dieser Richtung ist nicht sinnvoll, da bei hohen Schneckenvorlaufgeschwindigkeiten in erster Linie die Schmelze im Vorraum verdichtet wird, wogegen für die Füllung des Formhohlraumes dadurch wenig gewonnen wird.

Eine Alternative zur oben geschilderten Entwicklung ist in der US 3,052,925 aufgezeigt. Hier wird vorgeschlagen, plastifiziertes Material zunächst so zu komprimieren, dass nach Öffnen einer Absperrung eine zumindest teilsweise Füllung des Formhohlraums allein auf Grund der Expansion des unter Überdruck stehenden Materials erfolgt. Zur Unterstützung dieses Füllvorgangs sieht die US 3,052,925 optional ein zusätzliches elastisches Medium, wie zum Beispiel eine Feder, vor. Der Druckverlauf beim Einspritzen ist von der Bewegung der Einspritzeinheit vorgegeben.

Aufgabe der Erfindung ist es, den Druckeverlauf im Formhohlraum, der primär durch die adiabatische Entspannung des Kuntstoffes bestimmt ist, zu modifizieren.

Erfindungsgemäß wird dies durch die Merkmale des Anspruchs 1 erreicht, wobei die Absperrung zur Modifizierung des Druckverlaufs im Formhohlraum gesteuert geöffnet wird.

Die Erfindung geht davon aus, daß der gesamte Formhohlraum lediglich durch Expansion des im Vorraum angesammelten, unter Druck stehenden Kunststoffvorrates gefüllt wird. Durch das erfindungsgemäße gesteuerte Öffnen der Absperrung kann der Druckverlauf ein Formhohlraum geeignet modifizlert und damit optimal an die jeweilige Formgebung des Spritzgussteils angepasst werden.

Kommt es beim Füllen der Form absichtlich oder unabsichtlich zu einer Bewegung der Schnecke bzw. eines sonstigen Einspritzkolbens, so führt diese lediglich zu einer Modifikation des an sich die Füllung der Form beherrschenden adiabatischen Expansionsvorganges. Praktisch bedeutet dies, daß der herkömmlicherweise 800 bar nicht übersteigende Druck im Vorraum bei Durchführung der Erfindung typischerweise über 1500 bar gesteigert wird, und vor allem, daß das Volumen des Vorraumes nicht wie üblich beim Einspritzvorgang weitestgehend reduziert wird, sondern ganz oder doch überwiegend erhalten bleibt.

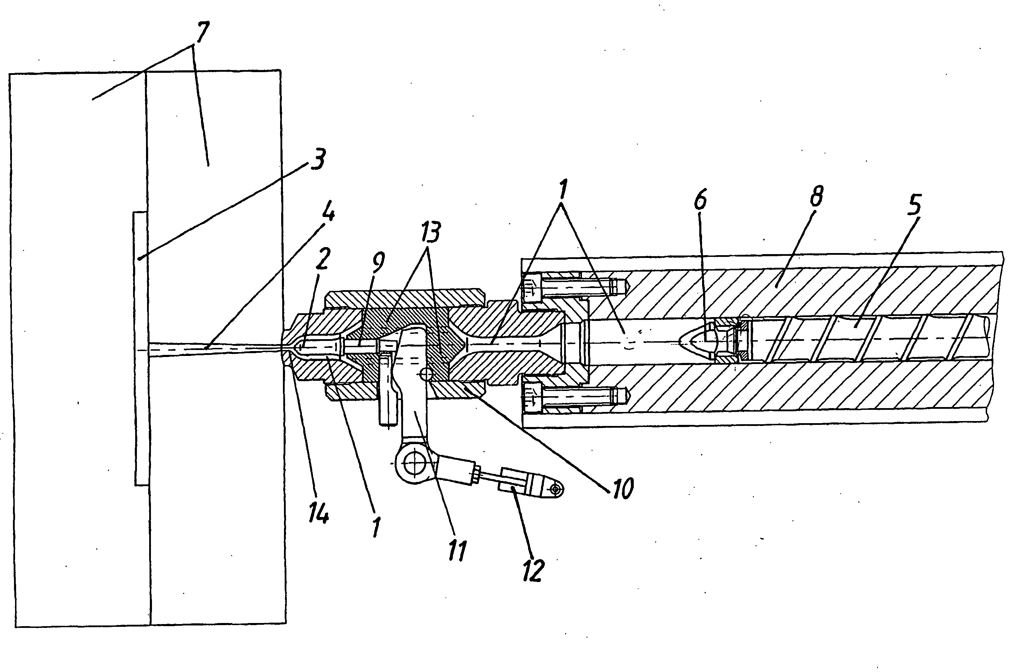

Einzelheiten der Erfindung werden anschließend anhand der Zeichnung erläutert, in welcher im schematischen Querschnitt eine an sich herkömmliche Einrichtung zur Durchführung des Verfahrens dargestellt ist.

Das erfindungsgemäße Verfahren kann auf jeder herkömmlichen Spritzgießeinrichtung durchgeführt werden, sofern der Zufluß zum Formhohlraum durch eine Absperrung erfindungsgemäß steuerbar ist. Es sind daher nur die verfahrenswesentlichen Teile einer Spritzgießeinrichtung dargestellt und beschrieben.

Bei der dargestellten Einrichtung wird thermoplastischer Kunststoff im Zylinder 8 durch eine Schnecke 5 plastifiziert und gelangt dabei in den Vorraum 1. Dieser reicht durch die Bohrungen 13 bis fast an die Form 7. Seine vordere Öffnung 14 ist zur Form 7 hin mittels einer Absperrung 2 verschließbar, wogegen ein Rückströmen des Kunststoffes aus dem Vorraum 1 durch eine Rückstromsperre 6 an der Spitze der Schnecke 5 verhindert wird.

Wesentlicher Funktionsteil der Absperrung 2 ist in an sich bekannter Weise eine Verschlußnadel 9, welche unter dem Druck des Kunststoffes im Vorraum 1 die Tendenz hat, sich nach rechts in der Zeichnung zu bewegen. In Verschlußrichtung wird die Nadel 9 von einem um den Bolzen 10 schwenkbaren Hebel 11 beaufschlagt, welcher unter der Wirkung einer steuerbaren Hydraulikeinheit 12 steht.

Wesentlich ist, daß in dem vor der Absperrung 2 liegenden Kunststoff ein wesentlich höherer Druck aufgebaut wird, als dies bisher üblich war, und daß die Füllung des Formhohlraumes 3 und des davor liegenden Angußbereiches 4 durch Expansion des Kunststoffes im Vorraum 1 erfolgt. Dies schließt nicht aus, daß zur Beeinflussung des Druckverlaufes im Formhohlraum 3 nach dem Öffnen der Absperrung 2 auch eine Bewegung der Schnecke 5 zur Erhöhung bzw. Erniedrigung des Druckes im Formhohlraum 3 erfolgt. Das Öffnen der Absperrung 2 erfolgt gesteuert, um den Druckverlauf im Formhohlraum 3, der primär durch die adiabatische Entspannung des Kunststoffes im Vorraum 1 bestimmt ist, zu modifizieren.

Um für einen gegebenen Formhohlraum 3 Druck und Volumen im Vorraum 1 passend bestimmen zu können, wählt man zweckmäßigerweise zuerst ein Volumen für den Vorraum 1, welches wesentlich das Volumen des Formhohlraumes 3 übersteigt. Anschließend wird der gewünschte Druck im Formhohlraum 3 gewählt. Der Druck im Vorraum 1, welcher zu diesem Resultat führt, kann in einer einfachen Versuchsreihe ermittelt werden. Bei Kenntnis der Zustandsgleichung des verwendeten Kunststoffes ist es auch ohne weiteres möglich, diesen Druck zu berechnen. So kann zum Beispiel wie folgt vorgegangen werden:

| | |
|---|---|
| Verwendetes Material | Polystyrol 143 E |
| Dichte bei Raumtemperatur | 1,047 g/cm³ |
| Volumen des vor der Absperrung 2 liegenden Vorraumes 1 | 45,6 cm³ |
| Hinter der Absperrung 2 liegendes Volumen | 1,37 cm³, davon 1 cm³ eigentlicher Formhohlraum 3. |

Der Kunststoff steht unter einem Druck von 2000 bar, seine Temperatur liegt um 30° über der gewünschten Arbeitstemperatur von 220°C.
Die Absperrung 2 wird nun geöffnet, wodurch sich der Kunststoff auf das gesamte zur Verfügung stehende Volumen, also in den Bereich 4 des Angusses und in den Formhohlraum 3 hinein ausbreitet. Durch diese adiabatische Expansion erfolgt eine Abkühlung um 30°C und ein Druckabfall auf den gewünschten Endbereich von 500 bar. Dieser Druck reicht im allgemeinen für die Herstellung des gewünschten Produktes leicht aus, er kann jedoch durch ein Verschieben der Schnecke 5 im Anschluß an das Öffnen der Absperrung 2 erhöht oder (durch Verschieben nach links in der Zeichnung) verringert werden.

## Patentansprüche

1. Verfahren zum Spritzgießen, bei dem unter Druck stehender Kunststoff aus einem absperrbaren Vorraum (1) nach Öffnen einer Absperrung (2) in einen Formhohlraum (3) gespritzt wird und diesen unter Druck füllt, wobei das Volumen des Vorraums (1) und der darin herrschende Druck beim Öffnen der Absperrung (2) Werte aufweisen, bei deren Vorhandensein mindestens die Hälfte des im Verfahren im Formhohlraum (3) erreichten Druckes auch entsteht, wenn das Volumen des Vorraumes (1) während des Einspritzvorganges konstant gehalten wird und dass die Absperrung (2) zur Modifizierung des Druckverlaufs im Formhohlraum (3) gesteuert geöffnet wird.

2. Verfahren nach Anspruch 1, **dadurch gekennzeichnet, dass** der Druck im Vorraum (1) beim Öffnen der Absperrung (2) über 1000 bar, vorzugsweise über 1500 bar, liegt.

3. Verfahren nach Anspruch 1 oder 2, **dadurch gekennzeichnet, dass** das Volumen des Vorraumes (1) beim Öffnen der Absperrung (2) mindestens doppelt so groß ist wie das hinter der Absperrung (2) liegende, den Formhohlraum (3) umfassende Volumen.

4. Verfahren nach einem der Ansprüche 1 bis 3, **dadurch gekennzeichnet, dass** das Volumen des Vorraumes (1) während des Einspritzvorganges konstant gehalten wird, sodass der gesamte Druck im Formhohlraum (3) durch Expansion des zunächst nur den Vorraum (1) füllenden Kunststoffes entsteht.

## Claims

1. An injection-molding method in which plastic material being under pressure is injected from a antechamber (1), which can be shut off, into a mould cavity (3) after opening a shut-off means (2), and fills said mould cavity (3) under pressure, wherein at the opening the shut-off means (2) the volume of the antechamber (1) and the pressure prevailing therein are of values, at the existence of which at least half of the pressure achieved in the mould cavity (3) during the method is also achieved if the volume of the antechamber (1) is kept constant during the injection operation and wherein the shut-off means (2) is opened in a controlled manner in order to modify the pressure pattern in the mould cavity (3).

2. A method according to claim 1, **characterized in that** at the opening the shut-off means (2) the pressure in the antechamber (1) is above 1000 bar, preferably above 1500 bar.

3. A method according to claim 1 or 2, **characterized in that** at the opening the shut-off means (2) the volume of the antechamber (1) is at least double the volume which is downstream of the shut-off means (2) and which includes the mould cavity (3).

4. A method according to one of claims 1 to 3, **characterized in that** the volume of the antechamber (1) is kept constant during the injection operation so that the total pressure in the mould cavity (3) is produced by expansion of the plastic material which initially only fills the antechamber (1).

## Revendications

1. Procédé de moulage par injection, dans lequel une matière plastique sous pression est injectée depuis une antichambre (1) obturable, après ouverture d'un obturateur (2), dans une empreinte (3) et remplit celle-ci sous pression, le volume de l'antichambre (1) et la pression qui y règne ayant des valeurs, lors de l'ouverture de l'obturateur (2), en présence desquelles au moins la moitié de la pression atteinte lors du procédé dans l'empreinte (3) est également produite, lorsque le volume de l'antichambre (1) est maintenu constant pendant l'injection, et l'obturateur (2) étant ouvert de manière commandée pour modifier l'allure de pression dans l'empreinte (3).

2. Procédé selon la revendication 1, **caractérisé en ce que** la pression dans l'antichambre (1) lors de l'ouverture de l'obturateur (2) est supérieure à 1000 bars, de préférence supérieure à 1500 bars.

3. Procédé selon la revendication 1 ou 2, **caractérisé en ce que** le volume de l'antichambre (1) lors de l'ouverture de l'obturateur (2) est au moins le double du volume renfermant l'empreinte (3) située derrière l'obturateur (2).

4. Procédé selon l'une des revendications 1 à 3, **caractérisé en ce que** le volume de l'antichambre (1) est maintenu constant pendant l'injection, de sorte que la pression totale dans l'empreinte (3) est produite par l'expansion de la matière plastique ne remplissant d'abord que l'antichambre (1).
